Europäisches Patentamt

European Patent Office

Office européen des brevets

(19)

(11) Veröffentlichungsnummer: **0 126 200**
**A2**

## (12) EUROPÄISCHE PATENTANMELDUNG

(21) Anmeldenummer: 84100404.7

(22) Anmeldetag: 17.01.84

(51) Int. Cl.³: **H 02 G 3/22**

(30) Priorität: 21.05.83 DE 3318632

(43) Veröffentlichungstag der Anmeldung: 28.11.84
Patentblatt 84/48

(84) Benannte Vertragsstaaten: **AT BE CH DE FR GB LI NL**

(71) Anmelder: **Walter Rose GmbH & Co. KG, Lütkenheider Strasse 2, D-5800 Hagen 1 (DE)**

(72) Erfinder: **Hill, Günter, Dipl.-Ing., Karl-Halle-Strasse 95, D-5800 Hagen 1 (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

(54) Vorrichtung zur wasser- und gasdichten Durchführung insbesondere mehrerer Kabel durch Mauern od. dgl.

(57) Bei einer Vorrichtung (1) zur wasser- und gasdichten Durchführung von Leitungen und/oder Kabeln durch Mauern oder Wände mit einem mittleren, ggf. von einer Spirale od.dgl. gestützten Bereich aus Kunststoff und beidseitigen Endbereichen aus wärmeschrumpffähigem Material, insbesondere zur gleichzeitigen Durchführung mehrerer Kabel, soll eine Lösung geschaffen werden, mit der eine derartige Vorrichtung sowohl was ihre Handhabung als auch ihre konstruktive Gestaltung angeht vereinfacht wird, womit schließlich auch eine wirtschaftlichere Herstellung verbunden ist.

Dies wird dadurch erreicht, daß wenigstens einer der beiden wärmeschrumpffähigen Endbereiche (7) als Mehrkammer-Schrumpfschlauch ausgebildet ist.

EP 0 126 200 A2

"Vorrichtung zur wasser- und gasdichten Durchführung
insbesondere mehrerer Kabel durch Mauern od. dgl."


Die Erfindung richtet sich auf eine Vorrichtung zur wasserdichten und gasdichten Durchführung von Leitungen und/oder
Kabeln durch Mauern oder Wände, mit einem mittleren, ggf.
von einer Spirale od. dgl. gestützten Bereich aus Kunststoff und beidseitigen Endbereichen aus wärmeschrumpffähigem Material, insbesondere zur gleichzeitigen Durchführung
mehrerer Kabel.


Aus der DE-AS 18 03 726 ist eine Mauerdurchführung bekannt, die aus einem wärmeschrumpffähigen Material besteht, wobei deren mittlerer Bereich, d. h. der Bereich,
der in der Gebrauchslage in der Mauer oder der Wand liegt,
mit einer Spirale oder einem Rohr od. dgl. formstabil
unterstützt ist. Die beiden Endbereiche können auf ein so
durchgezogenes Kabel aufgeschrumpft werden. Werden mehrere
Kabel durch eine solche Mauerdurchführung verlegt, ist es
bekannt, zwischen die Kabel an beiden Enden Abdichtstücke
einzuschieben, die nach dem Aufschrumpfen der Endstücke
eine gute Dichtung gewährleisten (s. DE-OS 31 27 567 der
Anmelderin).


Aus Veröffentlichungen, z. B. der Firma Hauff, sind Mehrfach-Kabeldurchführungen bekannt, bei denen eine Wandbohrung beidseitig mit Deckeln versehen wird, die mehrere Kabeleinführstutzen aufweisen und als Spritzteil aus Kunststoff gefertigt sind. Die Kabeleinführstutzen stehen vor und werden nach Durchzug eines Kabels durch ein Schrumpfschlauchstück mit dem Kabel verbunden, wobei das Schrumpfschlauchstück sowohl die Kabeleinführstutzen als auch bereichsweise das Kabel überdeckt.

Nachteilig an den bekannten Lösungen ist insbesondere, daß der notwendige Montageaufwand vor Ort immer noch vergleichsweise hoch ist und eine Vielzahl von Einzelteilen vorliegen muß, die unterschiedliche Arbeitsvorgänge bei der gleichzeitigen Einführung mehrerer Kabel notwendig machen.

Aufgabe der Erfindung ist daher die Schaffung einer Lösung, mit der eine derartige Vorrichtung sowohl was ihre Handhabung als auch ihre konstruktive Gestaltung angeht vereinfacht wird, womit schließlich auch eine wirtschaftlichere Herstellung verbunden ist.

Bei einer Vorrichtung der eingangs bezeichneten Art wird diese Aufgabe gemäß der Erfindung dadurch gelöst, daß wenigstens einer der beiden wärmeschrumpffähigen Endbereiche als Mehrkammer-Schrumpfschlauch ausgebildet ist.

Mit der Erfindung wird erreicht, daß beim gattungsgemäßen Stand der Technik das Zwischenlegen von Füllstücken ent-

0126200

behrlich wird oder bei Lösungen die mit Abschlußdeckeln als Spritzteilen arbeiten, diese Abschlußdeckel entfallen. Der Mehrkammer-Schrumpfschlauch sorgt bei Erwärmung dafür, daß alle kammerbildenden Wände gleichzeitig schrumpfen, so daß auch dann eine dichte Durchführung gewährleistet ist, wenn einige Kammern nicht von Kabeln od. dgl. durchsetzt sind.

In Ausgestaltung sieht die Erfindung vor, daß die beiden wärmeschrumpffähigen Endbereiche als Mehrkammer-Schrumpfschlauch ausgebildet sind. Diese Ausgestaltung ist dann zweckmäßig, wenn gewährleistet sein muß, daß beide Enden der Mauer- oder Wanddurchführung entsprechend dichtend auf die durchgeführten Kabelmäntel aufzuschrumpfen sind.

Die Vorrichtung kann in einigen Ausgestaltungen verwirklicht sein. So sieht die Erfindung einmal vor, daß der Mittelbereich und ein Endbereich einstückig ausgebildet sind, wobei im Mittelbereich die kammerbildenden schrumpffähigen Stege entfernt sind. Diese Gestaltung ist insbesondere dann zweckmäßig, wenn der Mittelbereich von einer Spirale, einer Metallhülse od. dgl. gegen Zusammendrücken bewahrt werden soll, um die Spirale einlegen zu können.

In weiterer abgeänderter Ausgestaltung kann dagegen vorgesehen sein, daß die beiden Endbereiche und der Mittelbereich zunächst als Einzelelemente gefertigt und die kammerbildenden Stege der Mittelbereiche teilweise zum Überschrumpfen auf die Ränder des Mittelbereiches entfernt
sind.

Mit der Erfindung wird erreicht, daß die Bereitstellung
einer Vielzahl von Endkappen mit je nach Einsatz, Art und
Weise unterschiedlichen Kabelschäften entbehrlich ist. So
kann z. B. bei gleicher Gestaltung des Mehrkammer-Schrumpfschlauchendes der Benutzer einer solchen Vorrichtung bei
einem Kabel großen Durchmessers die kammerbildenden Stege
ganz oder teilweise entfernen und so den verfügbaren Querschnitt den jeweiligen Erfordernissen anpassen. Es können
in gleicher Weise eine Mehrzahl von Kabeln gleicher Durchmesser durch die einzelnen Kammern gezogen werden oder bei
teilweiser Entfernung von kammerbildenden Wänden Kabel mit
größeren oder kleineren Durchmessern, ohne daß die Gestaltung der Vorrichtung werksseitig geändert werden müßte.

In weiterer Ausgestaltung kann vorgesehen sein, daß die
beiden Endbereiche mit Anteilen des Mittelbereiches einstückig gefertigt und die Ränder der Mittelbereich-Anteile
zum gegenseitigen Aufschrumpfen ausgestaltet sind.

Nach der Erfindung kann auch zur Erleichterung des Einziehens von Kabeln vorgesehen sein, daß die Kammern vorkonfektioniert von Zugfäden od. -kabeln durchsetzt sind, die

- 5 -

0126200

die Vorrichtung beidseitig für die Verbindung mit einzufädelnden Kabeln oder Schläuchen überragen.

Die Erfindung ist nachstehend anhand der Zeichnung beispielsweise näher erläutert. Diese zeigt in

Fig. 1 eine perspektivische Ansicht einer Seite einer Vorrichtung

Fig. 2 eine schematische Darstellung einer Mauerdurchführung,

Fig. 3 und 4 zwei Ausführungsbeispiele der Erfindung in schematischer Darstellung.

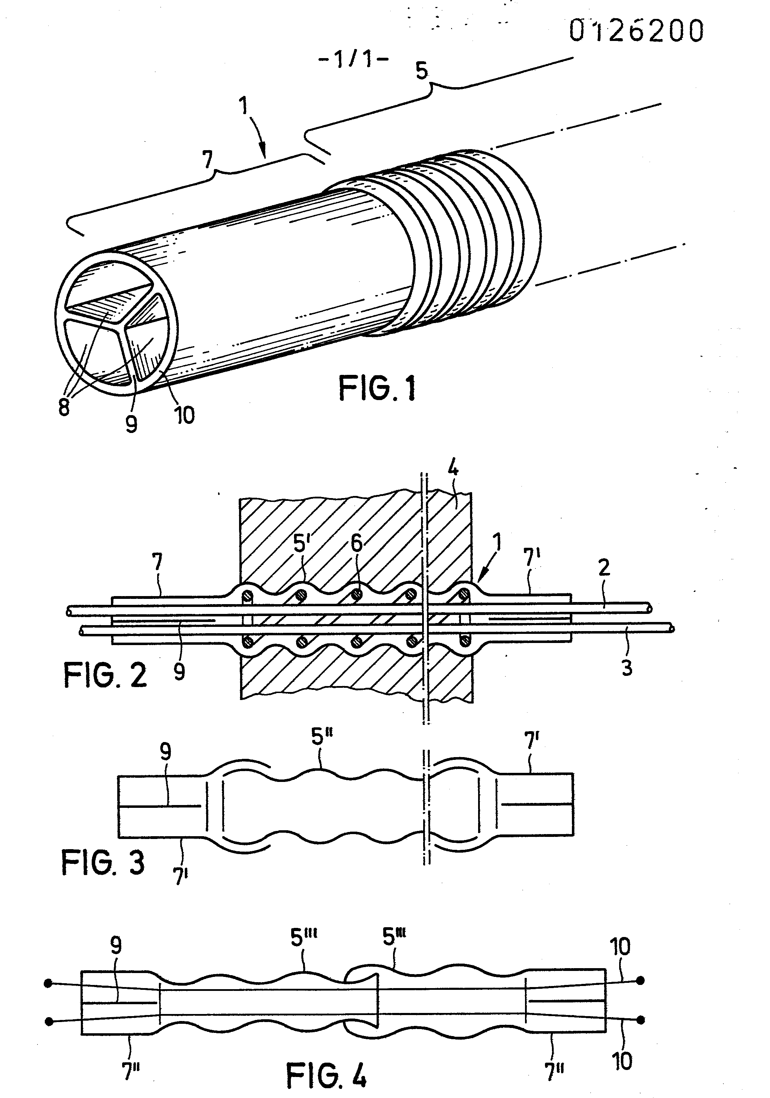

Die allgemein mit 1 bezeichnete Vorrichtung dient zur Durchführung von mehreren Kabeln 2 und 3 durch eine Wand oder Mauer 4, die andeutungsweise in Fig. 2 wiedergegeben ist. Die Kabel 2 und 3 können gleichen Durchmesser aufweisen oder aber auch verschieden stark ausgebildet sein.

Im wesentlichen besteht die Vorrichtung 1 aus einem Mittelbereich 5, der im wesentlichen in der Mauer 4 liegt und von einer Spirale 6 gestützt ist sowie zwei Endbereichen 7. Wenigstens diese Endbereiche bestehen aus wärmeschrumpffähigem Material, was auch für den Mittelbereich 5 zutreffen kann.

Wie sich insbesondere aus Fig. 1 ergibt, ist wenigstens ein Endbereich 7 als Mehrkammer-Schrumpfschlauch ausgebildet. Die Kammern in Fig. 1 sind mit 8 bezeichnet. An dieser Stelle sei darauf hingewiesen, daß die Erfindung nicht auf die dargestellten Ausführungen mit drei Kammern beschränkt ist. Hier können selbstverständlich auch zwei Kammern oder mehr als drei vorgesehen sein. Die innenliegenden, kammerbildenden Stege 9 sind dabei ebenso wärmeschrumpffähig wie die außenliegenden Schlauchwände 10.

Wird z. B. beim Ausführungsbeispiel nach Fig. 1 in jede Kammer 8 je ein Kabel gleicher Stärke eingeführt, so kann die Vorrichtung 1 direkt in der dargestellten Weise vor Ort eingesetzt werden. Soll aber z. B. ein Kabel größeren Durchmessers und gleichzeitig ein Kabel kleineren Durchmessers eingeführt werden, so muß der Benutzer der Vorrichtung 1 lediglich, z. B. mit Hilfe einer Schneideinrichtung, einen kammerbildenden Innensteg 9 entfernen oder der Länge nach auftrennen, um so genügend Raum für das Kabel mit dem größeren Durchmesser zu schaffen. Da alle Stege 9 und der Außenmantel 10 wärmeschrumpffähig ausgebildet sind, wird nach dem Aufschrumpfen ein völlig dichter Abschluß geschaffen.

In den Fig. 2 bis 4 sind dabei drei Varianten einer möglichen Ausgestaltung der Vorrichtung 1 dargestellt.

0126200

So zeigt Fig. 2 die Möglichkeit, einen Mittelbereich 5´ mit dem Endbereich 7 einstückig auszubilden, wobei im Mittelbereich 5´ die kammerbildenden schrumpffähigen Stege entfernt sind. Auf einen Rand ist dann dort ein mit 7´ bezeichneter Endbereich auf dem Mittelbereich 5´ aufgeschrumpft, was grundsätzlich werksseitig bereits erfolgt sein kann oder aber erst vor Ort beim Verlegen der Vorrichtung 1 vom Benutzer durchgeführt werden kann.

In Fig. 3 ist die Möglichkeit dargestellt, den Mittelbereich 5" und beide Endbereiche wie den Endbereich 7´ zu gestalten, so daß dort die Endbereiche auch die gleiche Bezugsziffer erhalten haben, d. h. dort werden auf einen in der Gestaltung völlig freien Mittelbereich 5" die beiden Endbereiche 7´ aufgeschrumpft, nachdem Stücke der kammerbildenden Stege 9 entfernt worden sind, wobei diese Teile dann vor dem Aufschrumpfen über die Ränder des Mittelbereiches 5" geschoben worden sind.

Schließlich ist in Fig. 4 eine weitere Gestaltung dargestellt, derart, daß die beiden Endbereiche 7" mit Anteilen versehen sind, die zusammen einen Mittelbereich 5 bilden. Aus diesem Grunde sind dort diese Anteile mit 5"´ bezeichnet. Sind die Bauteile identisch, können diese z. B. in der Mitte bereichsweise überschrumpft werden, wie dies in Fig. 4 angedeutet ist.

Es sei darauf hingewiesen, daß die in den Figuren gewählte Form der Mittelbereiche willkürlich gewählt wurde. In gleicher Weise können hier völlig glatte zylindrische Rohre oder andere Gestaltungen vorgesehen sein. Hierauf kommt es nach der Erfindung nicht an.

Um ggf. die Kabel 2 und 3 besser durch die Vorrichtung 1 hindurchziehen zu können, kann nach der Erfindung vorgesehen sein, daß z. B. werksseitig bereits Einzugsfäden oder -kabel 10 die Kammern 8 durchsetzen bzw. die gesamte Vorrichtung und die letztere beidseitig überragen, um eine Verbindung mit den einzufädelnden Kabeln bzw. Schläuchen zu ermöglichen und andererseits die Handhabung zu erleichtern.

Natürlich ist das beschriebene Ausführungsbeispiel noch in vielfacher Hinsicht abzuändern, ohne den Grundgedanken zu verlassen. So ist die Erfindung insbesondere nicht auf den Einsatz bei Mauerdurchführungen beschränkt, wenngleich hier der Einsatz besonders zweckmäßig ist. Es wurde auch schon erwähnt, daß die Erfindung nicht auf die besondere Gestaltung der Kammern 8 bzw. die Anzahl der kammerbildenden Stege 9 beschränkt ist u. dgl. mehr.

0126200

Patentansprüche:

1. Vorrichtung zur wasser- und gasdichten Durchführung von Leitungen und/oder Kabeln durch Mauern oder Wände mit einem mittleren, ggf. von einer Spirale od. dgl. gestützten Bereich aus Kunststoff und beidseitigen Endbereichen aus wärmeschrumpffähigem Material, insbesondere zur gleichzeitigen Durchführung mehrerer Kabel, dadurch gekennzeichnet, daß wenigstens einer der beiden wärmeschrumpffähigen Endbereiche (7) als Mehrkammer-Schrumpfschlauch ausgebildet ist.

2. Vorrichtung nach Anspruch 1, dadurch gekennzeichnet, daß beide wärmeschrumpffähigen Endbereiche (7) als Mehrkammer-Schrumpfschlauch ausgebildet sind.

3. Vorrichtung nach Anspruch 1 oder 2, dadurch gekennzeichnet, daß der Mittelbereich (5´) und ein Endbereich (7) einstückig ausgebildet sind, wobei im Mittelbereich (5) die kammerbildenden schrumpffähigen Stege (9) entfernt sind.

4. Vorrichtung nach einem der vorangehenden Ansprüche, dadurch gekennzeichnet,

0126200

daß die beiden Endbereiche (7‴) und der Mittelbereich (5") zunächst als Einzelelement gefertigt und die kammerbildenden Stege (9) der Endbereiche teilweise zum Überschrumpfen auf die Ränder des Mittelbereiches (5") entfernt sind.

5. Vorrichtung nach einem der vorangehenden Ansprüche, dadurch gekennzeichnet, daß die beiden Endbereiche (7") mit Anteilen (5"‴) des Mittelbereiches (5) einstückig gefertigt und die Ränder der Mittelbereich-Anteile (5"‴) zum gegenseitigen Aufschrumpfen ausgestaltet sind.

6. Vorrichtung nach einem der vorangehenden Ansprüche, dadurch gekennzeichnet, daß die Kammern (8) vorkonfektioniert von Zugfäden oder -kabeln (10) durchsetzt sind, die die Vorrichtung (1) beidseitig für die Verbindung mit einzufädelnden Kabeln (2, 3) oder Schläuche überragen.

0126200

**FIG. 1**

**FIG. 2**

**FIG. 3**

**FIG. 4**

69/4437